# EUROPEAN PATENT APPLICATION

(11) **EP 1 584 836 A1**
(43) Date of publication of application: **12.10.2005**
(21) Application number: 05290738.3
(22) Date of filing: 04.04.2005
(51) Int. Cl.: F16F 9/512

(54) **Hydraulic damper**

(30) Priority: 06.04.2004 KR 2004023563
(71) Applicant: Samwoo Corporation, Gyeongsangnam-do (KR)
(72) Inventor: Lee, Young Man, Busan-si (KR)
(74) Representative: Bentz, Jean-Paul

(57) **Abstract**

Disclosed is a hydraulic damper, which includes a cylinder (110) forming an appearance of the hydraulic damper; a piston (120) moving in the cylinder (110) and having a main orifice (126) formed in the piston (120) to act as a main passage of a hydraulic oil; a rod (130) provided to one side of the piston (120) so as to transfer an external impact to the piston (120); a piston ring (140) provided on an outer circumference of the piston (120); and an auxiliary piston ring (142) provided to one side of the piston ring (140) and having an auxiliary orifice (142') acting as a passage of the hydraulic oil. The auxiliary piston ring (142) is made of elastic material, and the auxiliary orifice (142') has a sectional area changed according to an impacting velocity of an external impacting body applied to the rod (130). This hydraulic damper gives an advantage that an external impact is effectively damped with a simple structure.

## Description

### BACKGROUND OF THE INVENTION

### Field of the Invention

The present invention relates to a hydraulic damper, and more particularly to a hydraulic damper having a fixed main orifice as well as a variable auxiliary orifice in the damper so that its damping force is changed according to the change of velocity of an impacting body applied from outside.

### Description of the Related Art

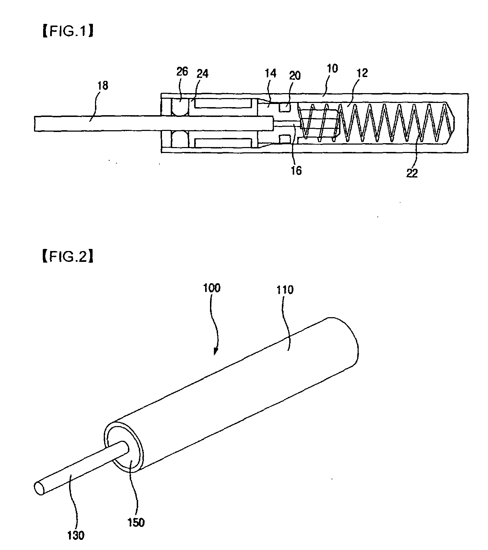

Fig. 1 is a sectional view showing a general hydraulic damper according to the related art. As shown in Fig. 1, a cylinder 10 forms an appearance, and an oil 12, or a hydraulic oil, is filled in the cylinder 10.

The cylinder 10 is sealed, and a piston 14 is provided therein. The piston 14 generally has a disk or cylindrical shape, and reciprocates in the cylinder 14 by using pressure received from a fluid, or the oil 12. In addition, an orifice 16 is formed at the center in the piston 14 to pass in a right and left direction. The orifice 16 becomes a passage of the oil 12.

A cylindrical rod 18 is provided to the left of the cylinder 10, and the rod 18 is installed to pass through the left side of the cylinder 10. That is to say, a left end of the rod 18 is exposed out of the left of the cylinder 10. In addition, a piston ring 20 is further provided on the outer circumference of the piston 14 to prevent flow of the oil 12, and a compression spring 22 is provided to the right of the piston 14 so as to push the piston 14 to the left.

Meanwhile, a rod guide 24 is provided in a left portion of the inside of the cylinder 10 so as to support the rod 18, and an oil seal 26 is further installed on the left portion of the rod guide 24 so as to prevent leakage of the oil 12.

The conventional hydraulic damper configured as mentioned above is operated as follows.

If an external force is applied to the left end of the rod 18, the piston 14 moves right. At this time, the oil 12 filled in a space on the right of the piston 14 is compressed. However, since the oil 12 is non-compressive fluid, the oil 12 is moved into a space on the left of the piston 14 through the orifice 16 by means of the pressure of the piston 14.

In addition, the amount of oil 12 moved to the left through the orifice 16 is restrained depending on size and shape of the orifice 16. As described above, the hydraulic damper damps an impact energy of an external impacting body by using resistance of the restrained oil 12.

As described above, the damper is configured to show suitable damping force by changing size or shape of the orifice 16 or viscosity of the oil 12. In addition, assuming that the damper has the same components, the damping force of the damper is proportional to velocity of the external impacting body. Meanwhile, as an impacting speed of the external impacting body is faster, that is as an impact energy is greater, the damper gives an increased damping force in response thereto. It is also called 'a self-control ability' of the damper, and the damper copes with the situation by itself when a large damping force against a large impacting energy is required.

However, the conventional hydraulic damper has the following problems.

In the conventional hydraulic damper as shown in Fig. 1, the orifice 16 acting as a passage of the oil 12 is formed in the piston 14, and shape and size of the orifice 16 are fixed. Thus, a damping force of the damper is increased in proportion to a velocity of an external impacting body at a constant ratio, so a damping force property for each velocity is monotonous.

That is to say, if the shape and size of the orifice 16 are selected to give a great damping force in preparation for the case that an external impacting body has a fast impacting velocity, a damping force may be excessively applied when an impacting velocity of the external impacting body is slow, thereby deteriorating the damping quality or causing malfunction.

To the contrary, if the shape and size of the orifice 16 are determined to give a relatively small damping force in preparation for the case that an external impacting body has a slow impacting velocity, a damping force may be insufficient when a damping velocity of the external impacting body is fast.

### SUMMARY OF THE INVENTION

Accordingly, the present invention is directed to a hydraulic damper that substantially obviates one or more problems due to limitations and disadvantages of the related art.

An object of the present invention is to provide a hydraulic damper whose damping force is automatically controlled according to an impacting velocity of an external impacting body.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a hydraulic damper, including: a cylinder forming an appearance of the hydraulic damper; a piston moving in the cylinder and having a main orifice formed in the piston to act as a main passage of a hydraulic oil; a rod provided to one side of the piston so as to transfer an external impact to the piston; a piston ring provided on an outer circumference of the piston; and an auxiliary piston ring provided to one side of the piston ring and having an auxiliary orifice acting as a passage of the hydraulic oil.

Preferably, the auxiliary piston ring is made of elastic material, and the auxiliary orifice has a sectional area changed according to an impacting velocity of an external impacting body applied to the rod.

Also preferably, the sectional area of the auxiliary orifice is decreased as an impacting velocity of the external impacting body is increased.

In another aspect of the invention, there is also provided a hydraulic damper including a cylinder forming an appearance of the hydraulic damper, and a piston linearly moving in the cylinder, wherein an orifice for guiding a hydraulic oil is formed in the piston, wherein an auxiliary orifice for controlling the amount of flow of the hydraulic oil by changing a size thereof according to an impacting velocity of an external impacting body is further formed on one side of the piston.

Preferably, the auxiliary orifice is formed on an auxiliary piston ring made of elastic material, which is formed on an outer circumference of the piston to move together with the piston.

The hydraulic damper configured as above according to the present invention gives an advantage that an external impact is effectively damped with a simple structure.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a sectional view showing a general hydraulic damper according to the related art;

Fig. 2 is a perspective view showing a hydraulic damper according to a preferred embodiment of the present invention;

Fig. 3 is an exploded perspective view showing the hydraulic damper according to a preferred embodiment of the present invention;

Fig. 4 is a sectional view showing that no external force is applied to the hydraulic damper according to the present invention;

Fig. 5 is a sectional view showing that an oil filled in the hydraulic damper according to the present invention is moved due to an external force; and

Fig. 6 is a sectional view showing inner configuration of the hydraulic damper according to the present invention to which an external force is applied.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a hydraulic damper, which may be applied to a vehicle or a door, according to a preferred embodiment of the present invention is described in detail with reference to the accompanying drawings.

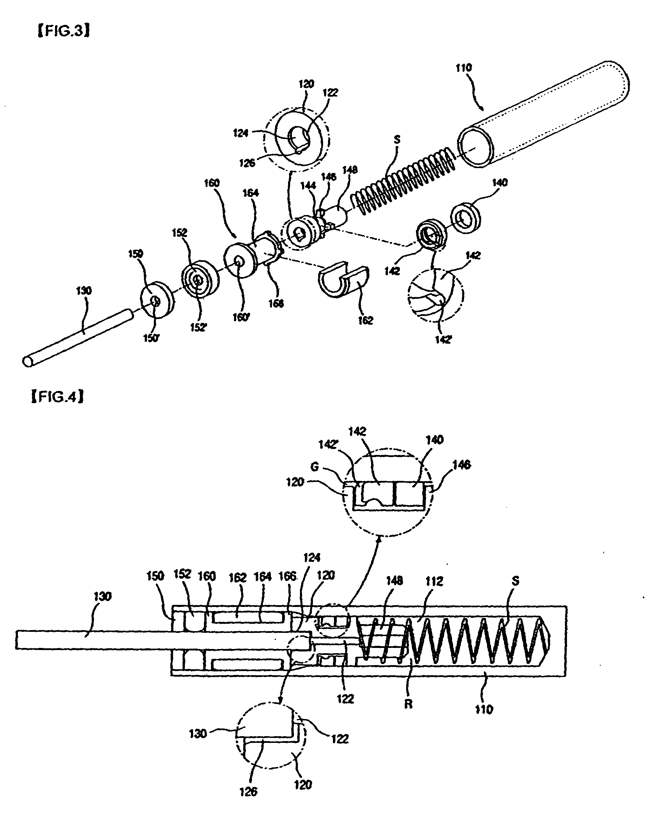

Fig. 2 is a perspective view showing a hydraulic damper according to the present invention, and Fig. 3 is an exploded perspective view showing the hydraulic damper according to an embodiment of the present invention.

As shown in Figs. 2 and 3, the hydraulic damper 100 includes a cylinder 110 that forms an appearance of the hydraulic damper 100. An oil 112, or a hydraulic oil, is filled in the cylinder 110.

A right end of the cylinder 110 is closed, and a piston 120 is mounted in the cylinder 110 to be movable right and left. The piston 120 generally has a disk or cylindrical shape, and linearly reciprocates in the cylinder 110. In addition, an oil flow hole 122 is formed at an inner center of the piston 120 to pass through it. The oil flow hole 122 acts as a passage for the oil 112 to move right and left.

The oil flow hole 122 is a circular passage with a predetermined diameter, and a left end of the oil flow hole 122 is stepped. That is to say, at a center of the left end of the piston 120, a rod seat 124 is formed so that a right end of a rod 130, described later, is seated and fixed thereon. The rod seat 124 has a circular shape in correspondence to the appearance of the rod 130, and is communicated with the oil flow hole 122. In addition, this rod seat 124 has a diameter larger than that of the oil flow hole 122.

In addition, a main orifice 126 is formed in the rod seat 124 so as to act as a main passage of the oil 112. The main orifice 126 is formed in a right and left direction in one side of the rod seat 124. Thus, the oil 112 may flow right and left even though the right end of the rod 130, described later, is adhered to the right side of the rod seat 124 to close the left side of the oil flow hole 122.

The rod 130 is inserted into the rod seat 124. The rod 130 is formed to have a cylindrical shape and has a predetermined length. In addition, the right end of the rod 130 is fitted into the rod seat 124 of the piston 120. Thus, an outer diameter of the rod 130 is preferably relatively larger than an inner diameter of the rod seat 124 by a small size. In this case, the rod 130 fitted into the rod seat 124 is integrated with the piston 120 to move in the cylinder 110, and not to be completely deviated out of the cylinder 110.

A piston ring 140 is seated on a center of the outer circumference of the piston 120 so as to be linearly movable slightly with respect to the piston 120. The piston ring 140 has a circular shape in correspondence to the inner diameter of the cylinder 110, thereby controlling flow of the oil 112 with moving right and left together with the piston 120.

Meanwhile, an auxiliary piston ring 142 is further installed to the left side of the piston ring 140. The auxiliary piston ring 142 has a size corresponding to the piston ring 140. When assembled to the piston 120, the auxiliary piston ring 142 is contacted with the piston ring 140 and linearly moves slightly with respect to the piston 120, like the piston ring 140.

An auxiliary orifice 142' is further formed on the left side of the auxiliary piston ring 142. The auxiliary orifice 142' has a predetermined size to guide flow of the oil 112. The moving amount of the oil 112 is changed depending on shape and size of the auxiliary orifice 142'. Since the auxiliary piston ring 142 is made of elastic material such as rubber, shape and size of the auxiliary orifice 142', that is a sectional area thereof, is changed due to an impacting velocity of an external impacting body.

In addition, such an auxiliary orifice 142' is also formed on the right side of the auxiliary piston ring 142. The auxiliary orifice 142' on the right side is formed at a position symmetrical to the auxiliary orifice 142' on the left side. If the auxiliary orifice 142' is formed in right and left direction in the auxiliary piston ring 142 respectively as mentioned above, the auxiliary piston ring 142 may be assembled in an easier way. That is to say, since the same auxiliary orifice 142' is formed in a right and left direction in the auxiliary piston ring 142, there is no need to consider right and left of the auxiliary piston ring 142 during assembling.

A ring seat 144 is formed at the center of the outer circumference of the piston 120 so that the piston ring 140 and the auxiliary piston ring 142 are seated thereon. A spring support 146 is formed at the right end of the ring seat 144 so as to support a left end of a compression spring (S), described later. The spring support 146 is integrally protruded from the outer circumference of the piston 120. There may be provided a plurality of spring supports. In addition, a spring insert 148 is formed on the right side of the spring support 146 so that a compressing spring (S), described later, is inserted therein.

The compression spring (S) is installed to the right side of the piston 120. The compression spring (S) has a predetermined length, and adopts a compression coil spring that receives a compressing force along a centerline of the coil according to a direction of force. The left end of the compression spring (S) is inserted into the spring insert 148 of the piston 120, and its right end is supported in contact with the right inner end of the cylinder 110.

A left side of the cylinder 110 is open, and this left side of the cylinder 110 is shielded using a cover 150. In addition, a cover hole 150' is formed at the center of the cover 150 so that the rod 130 may pass through it.

An oil seal 152 is provided to the right side of the cover 150. The oil seal 152 prevents the oil 112 from being leaked out. An oil seal hole 152' is formed in the oil seal 152 so that the rod 130 may pass through it.

A rod guide 160 is fixed to the right side of the oil seal 152 so as to support the rod 130. The rod guide 160 has a predetermined size. A rod guide hole 160' is formed in an inner center of the rod guide 160 to pass through it right and left so that the rod 130 may slide through the rod guide hole 160'. The rod guide hole 160' guides right and left movement of the rod 130.

A correcting member 162 is provided to an outer circumference of the rod guide 160. Thus, a member seat 164 is formed on the outer circumference of the rod guide 160 so that the correcting member 162 may be seated thereon. In addition, a hooking protrusion 166 for preventing deviation of the correcting member 162 is formed at the right end of the rod guide 160. The hooking protrusion 166 is protruded in a circumferential direction from the outer circumference of the rod guide 160. There are provided a plurality of such hooking protrusions 166. Thus, the oil 112 flows through a gap between the hooking protrusions 166.

The correcting member 162 is made of porous materials such as sponge. Thus, if the rod 130 moves right into the cylinder 110, the correcting member 162 is shrunk to control a capacity of an inner space of the cylinder 110. That is to say, since the inner space of the cylinder 110 is limited, there may cause a problem that the oil 112, which is non-compressive material, should be compressed when the rod 130 is inserted in. Thus, the correcting member 162 is shrunk at this time to play a buffering role so that the rod 130 may be inserted into the piston 120.

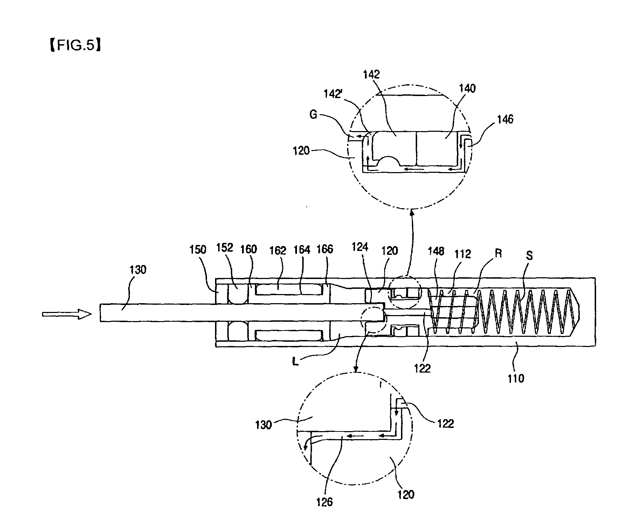

Now, operation states of the hydraulic damper configured as mentioned above according to the present invention are described with reference to Figs. 4 to 6.

First, Fig. 4 shows the hydraulic damper 100 to which no external force is applied. At this time, the piston 120 moves left due to the force of the compression spring (S) and comes in contact with the rod guide 160. In addition, the oil 112 in the cylinder 110 is mostly positioned in the right of the piston 120.

In this state, if an external force (or, an external impact) is applied to the rod 130 in a right direction (see an arrow in Fig. 5), the rod 130 pushes the piston 120 in a right direction. Thus, the piston 120 is slid in the cylinder 110 to the right. At this time, the piston ring 140 is pushed left on the ring seat 144, so the auxiliary piston ring 142 is also pushed by the piston ring 140 and then adhered to the left end of the ring seat 144 as shown in Fig. 5 in detail.

If the piston 120 moves right, a right space (R) is gradually reduced, and a left space (L) in the left side of the piston 120 is increased. However, since the oil 112 filled in the right space (R) of the piston 120 is non-compressive material, the oil 112 is moved left through the oil flow hole 122 and the main orifice 126.

The oil 112 moving left through the oil flow hole 122 is moved to the left of the piston 120 via the main orifice 126 formed in the rod seat 124 as shown in the enlarged view of Fig. 5 in detail. In addition, the amount of the oil 112 moved left through the oil flow hole 122 is limited by size and shape of the main orifice 126. By using a resistance of the limited oil 112, the hydraulic damper 100 damps an impact energy of the external impacting body.

Meanwhile, the piston ring 140 and the auxiliary piston ring 142 are assembled to the piston 120 with a small gap that allows slight linear movement. Thus, the piston ring 140 and the auxiliary piston ring 142 do not move at an initial stage when the rod 130 and the piston 120 start moving. Therefore, if the piston 120 keeps moving as much as the gap with the auxiliary piston ring 142, the auxiliary piston ring 142 and the piston ring 140 come in contact with the left end of the ring seat 144 of the piston 120. From this point, the rod 130, the piston 120, the piston ring 140 and the auxiliary piston ring 142 are integrally moved right.

In addition, since a slight gap (G) is formed between the outer circumference of the piston 120 and the left inner circumference of the cylinder 110, the oil 112 is moved left even through the gap (G). That is to say, when the rod 130 moves right due to an external force, the piston ring 140 and the auxiliary piston ring 142 are adhered to the left end of the ring seat 144 as shown in the enlarged view of Fig. 5. Thus, the oil 112 flowing left through the space between the piston 120 and the spring support 146 passes through the auxiliary orifice 142' of the auxiliary piston ring 142 via the space between the outer circumference of the ring seat 144 and the piston ring 140, and is then discharged to the left space (L) of the piston 120 via the gap (G).

As mentioned above, when a force (or, an impact) is applied to the rod 130 from outside, the oil 112 moves to the left space (L) through the oil flow hole 122 and the auxiliary orifice 142'. At this time, it is also possible that the oil flow hole 122 and the main orifice 126 have much larger size than the auxiliary orifice 142' so that the amount of flow moving through the oil flow hole 122 and the main orifice 126 is relatively greater than the amount of flow moving through the auxiliary orifice 142'.

Meanwhile, the amount of flow of the oil 112 moving through the auxiliary orifice 142' is changed depending on an impacting velocity of an external impacting body. That is to say, since the piston 120 is made of solid material with substantially no elasticity, size and shape of the oil flow hole 122 and the main orifice 126 formed in the piston 120 are not changed. However, since the auxiliary piston ring 142 is made of elastic material such as rubber, size and shape of the auxiliary orifice 142' formed in the auxiliary piston ring 142 are changed depending on the pressure of the oil 112 filled in the right space (R).

Thus, in case that an external impacting body pushes the rod 130 fast in a right direction, the pressure of the oil 112 in the right space (R) of the piston 120 is increased high, and the high pressure oil 112 acting on the auxiliary piston ring 142 greatly compresses the auxiliary piston ring 142 so that the size of the auxiliary orifice 142' is greatly reduced. In this case, the entire flow passage of the oil 112 is greatly decreased, so movement of the oil 112 in a left direction is seriously limited. Thus, the pressure of the oil 112 in the right space (R) is increased high and a damping force is increased.

To the contrary, in case that an external impacting body slowly pushes the rod 130 in a right direction, pressure increase of the oil 112 in the right space (R) is reduced. Thus, the oil 112 at a relatively low pressure acts on the auxiliary piston ring 142, so the auxiliary piston ring 142 is less shrunk. Resultantly, the size of the auxiliary orifice 142' is less reduced.

Since the whole flow passage of the oil 112 is reduced to a small extent when an external impacting body is slowly applied, flow of the oil 112 is relatively activated and the pressure of the oil 112 in the right space (R) is less increased, thereby showing a low damping force.

As mentioned above, a damping force of the hydraulic damper 100 affected by the change of velocity of the external impacting body is changed depending on size and shape of the main orifice 126 and the auxiliary orifice 142'. In particular, a damping force is automatically controlled by means of the change of a sectional area of the auxiliary orifice 142' caused by the change of shape of the auxiliary piston ring 142 made of elastic material.

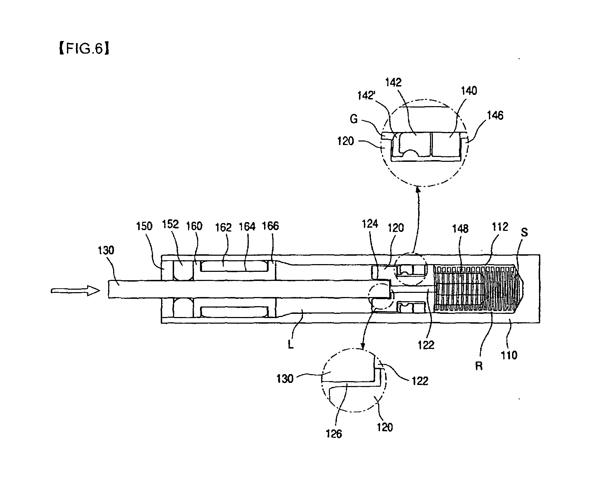

Fig. 6 shows that the piston 120 is moved right completely in the cylinder 110 by means of an external impacting body. If the external force that forces right movement of the piston 120 is eliminated, the piston 120 returns left to its original position.

That is to say, if the external force applied to the left end of the rod 130, since the compression spring (S) is in a compressed state as shown in Fig. 6, the piston 120 is moved left by means of the force of the compression spring (S). At this time, the oil 112 mainly flows from the left space (L) to the right space (R) through the oil flow hole 122.

The scope of the present invention is not limited to the aforementioned embodiments, and various changes will be possible to those ordinarily skilled in the art on the basis of the present invention within the scope of the invention.

For example, though it is described in the above embodiment only for the case that a damping force is activated only when an external force is applied, it is also possible that the hydraulic damper is configured to give a damping force when the piston 120 returns to its original state by removal of an external force.

In addition, it is also possible to form a separate movement passage of the oil 112 in addition to the oil flow hole 122 and the auxiliary orifice 142' so that the piston 120 may return to its original position without a large resistance. That is to say, a relief hole may be perforated in the right side of the piston 120.

In addition, when the piston 120 starts moving left (or, starts returning), the piston ring 140 and the auxiliary piston ring 142 do not move at an initial stage, but the piston ring 140 comes in contact with the right end of the ring seat 144 of the piston 120 after slight movement, similar to the case that the piston 120 moves right due to an external force. Thus, if a large hole is formed in the right end of the ring seat 144 of the piston 120, the oil 112 moves through the large hole in addition to the oil flow hole 122. Thus, the oil 112 in the left space (L) may move and return to the right space (R) without resistance. Then, the pressure of the oil 112 is not changed, thereby giving no damping force.

According to the present invention described above, the main orifice as well as the auxiliary orifice are used as a flow passage of the oil, and the auxiliary orifice has size and shape changed according to the pressure of the oil. Thus, it is possible to automatically control a damping force according to an external force.

That is to say, since the auxiliary piston ring made of elastic material and in which the auxiliary orifice is shaped is provided in the damper in addition to the piston ring, the change of shape of the auxiliary piston ring causes the change of sectional area of the auxiliary orifice, thereby giving a suitable damping force in correspondence to an impacting velocity of an external impacting body.

It will be apparent to those skilled in the art that various modifications and variations can be made in the present invention. Thus, it is intended that the present invention covers the modifications and variations of this invention provided they come within the scope of the appended claims and their equivalents.

## Claims

1. A hydraulic damper, comprising:
a cylinder forming an appearance of the hydraulic damper;
a piston moving in the cylinder and having a main orifice formed in the piston to act as a main passage of a hydraulic oil;
a rod provided to one side of the piston so as to transfer an external impact to the piston;
a piston ring provided on an outer circumference of the piston; and
an auxiliary piston ring provided to one side of the piston ring and having an auxiliary orifice acting as a passage of the hydraulic oil.

2. The hydraulic damper according to claim 1, wherein the auxiliary piston ring is made of elastic material, and the auxiliary orifice has a sectional area changed according to an impacting velocity of an external impacting body applied to the rod.

3. The hydraulic damper according to claim 1 or 2, wherein the sectional area of the auxiliary orifice is decreased as an impacting velocity of the external impacting body is increased.

4. A hydraulic damper including a cylinder forming an appearance of the hydraulic damper, and a piston linearly moving in the cylinder, wherein an orifice for guiding a hydraulic oil is formed in the piston, wherein an auxiliary orifice for controlling the amount of flow of the hydraulic oil by changing a size thereof according to an impacting velocity of an external impacting body is further formed on one side of the piston.

5. The hydraulic damper according to claim 4, wherein the auxiliary orifice is formed on an auxiliary piston ring made of elastic material, which is formed on an outer circumference of the piston to move together with the piston.
